# EUROPÄISCHE PATENTSCHRIFT

(11) **EP 2 454 734 B1**
(45) Veröffentlichungstag und Bekanntmachung des Hinweises auf die Patenterteilung: **01.11.2017**
(21) Anmeldenummer: 10737018.1
(22) Anmeldetag: 16.07.2010
(51) Int. Cl.: G11B 27/11, G11B 27/034, H04N 5/222, H04N 7/18, H04N 21/218, H04N 21/235, H04N 21/2743, H04N 21/435, H04N 21/84, H04N 21/845

(54) **ANORDNUNG ZUR VIDEOAUFNAHME VON VERANSTALTUNGEN**
DEVICE FOR THE RECORDING OF EVENTS
DISPOSITIF POUR L'ENREGISTREMENT D'EVENEMENTS

(30) Priorität: 16.07.2009 AT 11242009
(43) Veröffentlichungstag der Anmeldung: 23.05.2012
(73) Patentinhaber: viprtec GmbH, 3362 Mauer-Öhling (AT)
(72) Erfinder: HALLER, Richard, A-3300 Amstetten (AT); MAYER, Robert, A-3300 Amstetten (AT); ZOBIC, Sinisa, A-3300 Amstetten (AT); SCHEIBLAUER, Thomas, A-1220 Wien (AT)
(74) Vertreter: Müllner, Martin
(86) Internationale Anmeldenummer: PCT/EP2010/060372
(87) Internationale Veröffentlichungsnummer: WO 2011/007011

(56) Entgegenhaltungen:
- EP-A1- 1 102 271
- EP-A2- 0 945 862
- EP-A2- 0 967 584
- WO-A1-03/053063
- US-A1- 2002 116 716
- US-A1- 2004 032 495

## Beschreibung

### Technisches Gebiet

Die Erfindung betrifft eine Anordnung nach dem Oberbegriff des Anspruchs 1.

### Stand der Technik

Bei Sportübertragungen im Fernsehen ist es bekannt, dass Spiel entscheidende oder kritische Szenen im Regieraum durch Marker gekennzeichnet werden. Der Bildschnitttechniker setzt einen Startmarker während der Wiederholung einer Aufzeichnung und einen Stoppmarker nach eigenem Ermessen. Auf diese Weise werden Ausschnitte beispielsweise eines Fußballspieles erstellt und in einer Sportsendung ausgestrahlt. Studiomaschinen für digitale Aufzeichnungen ermöglichen die Herstellung von Videoclips, die einzeln oder aneinandergereiht für den Betrachter zur Verfügung stehen.

Ferner sind fix installierte Überwachungskameras bekannt, die Bilder bzw. einen Datenstrom an ein digitales Aufzeichnungsgerät senden, das im Inselbetrieb arbeitet und eine Aufnahmekapazität von beispielsweise 36 Stunden in Form einer Endlosschleife hat. Sollte ein Ereignis eintreten, dessen man nach beispielsweise 8 Stunden gewahr wird, dann kann die Aufzeichnung zurückgefahren und die Situation zum kritischen Zeitpunkt betrachtet werden. Ferner sind Abfragen über Internet bzw. Wiedergaben auch am Mobiltelefon möglich.

Die US-Patentschrift US 2009128631 A betrifft eine Anordnung von mindestens zwei Fernsehkameras z.B. auf einem Sportplatz, ein Übertragungssystem und mindestens einen Teilnehmer. Der Teilnehmer kann Einfluss nehmen und auswählen, welches Bild des Bildangebotes er sehen möchte. Der Teilnehmer kann auch beide (alle) Bilder gleichzeitig auf einem geteilten Bildschirm betrachten. Wenn es sich um einen Touchscreen handelt, dann erfolgt die Umschaltung auf ein ausgewähltes Bild durch gezielte Berührung des Bildschirmes. Dies löst ein Steuersignal aus, welches die Aufnahmen der Kameras selektiert. Die WO 03/053063 A betrifft die Übertragung von Sportveranstaltungen an Empfänger über langsame - also nicht leistungsfähige - Datenverbindungen. Dazu werden für nebensächliche Inhalte beispielsweise bei nicht besonders interessanten Phasen eines Spiels nur wenige Bilder pro Sekunde übertragen, während bei Schlüsselszenen die Übertragungsrate gesteigert wird. Für die Festlegung, wie viele Bilder pro Sekunde übertragen werden, ist ein "Editor", also eine physische Person erforderlich. Es ist zweckmäßig, wenn dieser Editor entweder offline oder zumindest zeitversetzt arbeitet, damit er die Möglichkeit hat, Szenen, die sich im Nachhinein als wichtig herausstellen, mit einer hohen Auflösung, also mit vielen Bildern pro Sekunde, zu übertragen. Dies entspricht sinngemäß dem beim Fernsehen bekannten Verfahren, interessante Szenen im Nachhinein in Zeitlupe - also mit vielen Bildern pro Sekunde - zu wiederholen. Es ist eine Person erforderlich, die das Zurückspulen der Aufzeichnung initiiert, Anfang und Ende der interessanten Szene markiert und genau diese Szene dann mit hoher Auflösung wiedergibt. Eine Automatik, die diesen Vorgang vereinfacht, und allenfalls nur solche Szenen für einen Clip speichert, ist nicht vorgesehen. Aus der EP 0967584 A ist ein Überwachungssystem mit Kameras bekannt, deren Bilder gespeichert und Veränderungen gegenüber diesen gespeicherten Referenzbildern erfasst und angezeigt werden. So können beispielsweise Personen detektiert werden, die in einen überwachten Bereich eintreten und sich dort bewegen. Es kann auf diese fokussiert werden. Eine Überwachungsperson kann ferner eingreifen und eine einzelne Kamera aus einer Vielzahl aufrufen, wie auch rückgreifend Kameraeinstellungen aus dem Überwachungssystem abrufen. Die US 20040032495 A bezieht sich auf Sportstadien oder Arenen, die über eigene Anlagen und Kameras verfügen, um das Geschehen auf großen Bildschirmen parallel zum Ereignis wiederzugeben. Als Ergänzung dazu zielt diese Druckschrift darauf ab, den einzelnen Besuchern über ihre privaten bildempfangsfähigen Telefone, Tablets oder Notebooks mit Internetzugriff oder nur anderen Form eines drahtlosen Signalzugriffs diese an sich interne Übertragung zukommen zu lassen. Das System kann allenfalls auch außerhalb des Stadions oder der Arena genutzt werden. Es ermöglicht auch, aus einer Mehrzahl von über einen mehrfach geteilten Bildschirm zugespielten Kamerablickwinkeln eine individuelle Auswahl zu treffen.

Für viele hundert Vereine der verschiedensten Sportarten (Fußball, Volleyball, Tennis, Hockey ...) wäre es günstig, wenn wesentliche Spielszenen unmittelbar nach einem Spiel analysiert und besprochen werden könnten, auch wenn kein Fernsehteam zugegen ist. Derzeit ist es so, dass der Trainer (oder auch ein Spieler) die automatische Aufzeichnung nochmals zur Gänze durchspielt und die wichtigsten Szenen herauskopiert. Dies ist mit einem Arbeits- und Zeitaufwand verbunden, der eine Analyse unmittelbar nach einem Spiel unmöglich macht.

### Darstellung der Erfindung

Die Erfindung geht von Sportübertragungen aus und zielt auf Spiele oder Veranstaltungen ab, die nicht von Fernsehteams aufgenommen werden. Aufgabe ist es, auch bei derartigen Spielen eine Analyse unmittelbar nach dem Spiel oder sogar in der Pause zu ermöglichen. Weiters wäre eine Übertragung via Internet erstrebenswert bzw. wäre für die Clubfans eine Möglichkeit, Zusammenfassungen unmittelbar nach dem Spiel anzusehen, besonders attraktiv. Die Erfindung zielt darauf ab, solche Übertragungen selbsttätig mit dem geringst möglichen Aufwand, was die Zusammenfassungen der Spiele betrifft, durchzuführen.

Dies wird erfindungsgemäß bei einer Anordnung der eingangs genannten Art durch die kennzeichnenden Merkmale des Anspruchs 1 erreicht.

Der beim Spiel vor Ort anwesende Platzwart oder eine andere Person drückt auf den Auslöser, der entweder diesen Zeitpunkt speichert oder per Draht oder drahtlos ein Steuersignal an das digitale Aufzeichnungsgerät sendet. Im Aufzeichnungsgerät werden dann zwei Marker generiert, von welchen der eine, nämlich der Startmarker, z.B. 15 Sekunden gegenüber dem Zeitpunkt der Betätigung zurückversetzt und ein zweiter Marker, nämlich der Stoppmarker, z.B. 20 Sekunden - vom Zeitpunkt der Betätigung als Nullpunkt - nach vorne versetzt ist. Es wird dann der Teil der Aufnahme zwischen Start- und Stoppmarker herauskopiert und als Videoclip mit einer Länge von 35 Sekunden separat gespeichert. Dieses Sekunden vor dem Tor und die ersten 10 oder 20 Sekunden danach separat als Clip gespeichert, wobei die Summe der Clips die elektronische Zusammenfassung ergibt.

Die Steuerung dieser Clipautomatik kann auch von einem Betrachter am Laptop via Internet durchgeführt werden, wenn etwa ein Signal über eine Maustaste od. dgl. an das digitale Aufzeichnungsgerät und bzw. oder den Datenspeicher des Servers im Internet gesendet wird.

Bei entsprechendem Zugang zum Internet bzw. zu diesem Internetportal kann ein Betrachter des Spiels auch seine eigene Zusammenfassung nach seinen eigenen Wünschen zusammenstellen. Dazu ist vorgesehen, dass der oder die Auslöser jeweils mit Adressencodierung versehen sind und die über den oder die Auslöser generierten Speicherinhalte jeweils einem adressspezifischen, individuellen Datenspeicher im Internet zugeordnet und von diesen Datenspeichern selektiv, gegebenenfalls mit Passwort, abrufbar sind.

### Kurze Beschreibung der Zeichnungen

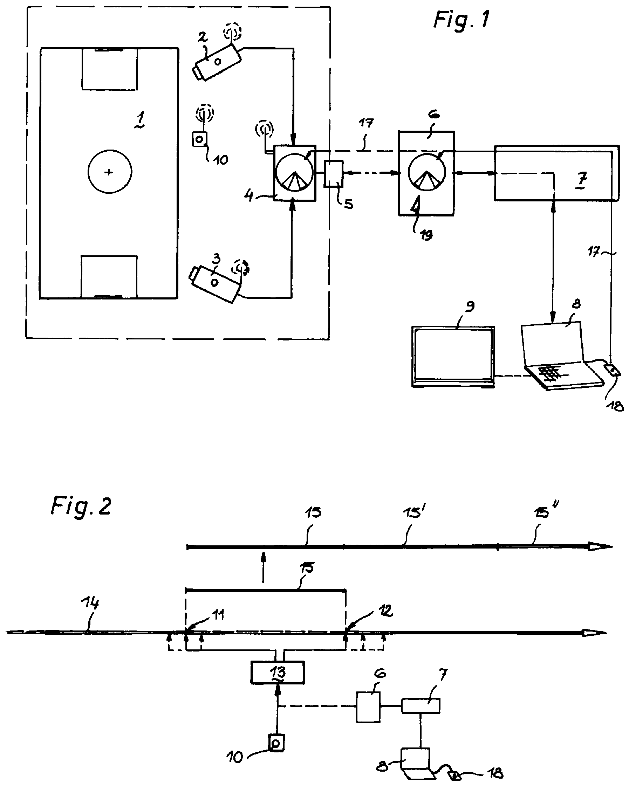

Ein Ausführungsbeispiel ist in der Zeichnung dargestellt. Fig. 1 zeigt ein Blockschaltbild einer Anordnung zur Videoaufnahme, Übertragung und Wiedergabe und Fig. 2 einen Datenstrom mit Steuersignal und Markern zur Erstellung eines Videoclips in schematischer Darstellung.

### Bester Weg zur Ausführung der Erfindung

Im Bereich eines Spielfeldes 1 (Fußballfeldes) sind Kameras 2 und 3 installiert. Diese können starr montiert oder mit einer Ballerkennungssoftware dem Ball folgend angeordnet sein. Die Kameras 2, 3 übertragen per Draht oder drahtlos einen Datenstrom an ein digitales Aufzeichnungsgerät 4, das beispielsweise im Clubhaus aufgestellt ist. Über Monitore (nicht dargestellt) kann dort das Spiel verfolgt werden. Über ein Modem 5 wird der Datenstrom an einen Server 6 übertragen. Über diesen hat man im Wege des Internet 7 Zugriff auf diese Daten, also das Life-Videosignal, bzw. kann man von einem Computer oder Laptop 8 das Spiel auf einem Bildschirm 9 verfolgen.

Die Erfindung geht über diesen direkten Life-Zugriff hinaus und ermöglicht die halb automatische Erstellung einer Spielzusammenfassung, die vom Benutzer des Internet jederzeit nach dem Spiel vom Server abgerufen werden kann. Die Erfindung geht noch weiter und erlaubt die Herstellung einer individuellen Zusammenfassung oder Dokumentation durch jeden beliebigen (berechtigten) Benutzer, der Zugriff auf den Server 6 hat. Dazu ist ein Auslöser 10 - beispielsweise als Handsender - vorgesehen, der von einer Person (z.B. dem Platzwart) während des Spiels bedient wird. Der Handsender verfügt über eine Taste, die dann kurz gedrückt wird, wenn sich eine offensichtlich bemerkenswerte Spielsituation ergibt, also bei Fußball: wenn ein Tor fällt. Der Auslöser 10 sendet ein Steuersignal an das digitale Aufzeichnungsgerät 4, dessen Programmlogik zwei Marker generiert, nämlich einen Startmarker 11 und einen Stoppmarker 12. In Fig. 2 sind der als Handsender ausgebildete Auslöser 10, ein Markergenerator 13 (als Teil des digitalen Aufzeichnungsgerätes 4 und der laufend aufgezeichnete Datenstrom 14 als horizontale Zeitachse symbolisch dargestellt. Der Startmarker 11 wird bei laufender Aufnahme (oder auch nachträglich beim Betrachten des Spielverlaufs) um eine vorbestimmbare und über die Programmlogik einstellbare Zeitspanne gegenüber dem Einlangen des Steuersignals vom Auslöser 10 zurückversetzt und der Stoppmarker 12 entsprechend nach vorne positioniert. Der Startmarker 11 kann beispielsweise für fünfzehn Sekunden ab dem Steuersignal des Auslösers 10 zurückversetzt und der Stoppmarker 12 zehn Sekunden nach vorne gesetzt werden. Dadurch ergibt sich im Beispiel eine Szenenlänge von 25 Sekunden, in die das Ereignis (der Torschuss) eingebettet ist. In Fig. 2 ist dieser markierte Datenstrom als "Clip" 15 herausgehoben dargestellt. Im Zuge eines Spiels werden mehrere Situationen auf diese Art markiert und, es ergeben sich mehrere Clips 15, 15', 15", die aneinandergereiht abspeicherbar und abrufbar sind. Die Speicherung erfolgt im digitalen Aufzeichnungsgerät 4. Dieser Speicherinhalt wird zum Server 6 übertragen und steht dort neben der Aufzeichnung des gesamten Spiels über das Internet 7 abrufbar zur Verfügung. Das Abrufen erfolgt von einem Laptop 8 eines Internetbenützers aus, der Zugang zu dem Server 6 hat. Wie der Linienzug 17 (beginnend bei einer Maus 18) zeigt, kann die Auswahl der markanten Situationen statt mit dem Auslöser 10 vor Ort auch auf Distanz von einem berechtigten Benützer über das Internet erfolgen. Es wird ebenfalls ein Steuersignal und in weiterer Folge ein Startmarker 11 und ein Stoppmarker 12 generiert und so ein Clip 15 geschaffen, sowie eine Zusammenfassung als Summe der Clips 15, 15', 15"... erstellt.

Der Server 6 verfügt ferner über mehrere Datenspeicher 19 bzw. es steht der Plattform Webspace im Internet 7 zur Verfügung, worauf ein Benutzer entsprechend des definierten Benutzerprofils zugreifen kann. In diesem Sinn kann ein solcher Benutzer auf den Server 6 eine private Zusammenfassung oder Reportage aus einer auf dem Server 6 liegenden Aufzeichnung oder von einer Direktübertragung erstellen und in seinem adressspezifischen Datenspeicher 19 am Server 6 bzw. im Internet 7 deponieren. Diese Summe aus individuellen Clips 15, 15', 15" ist nur für den berechtigten Benutzer und den von ihm autorisierten Personenkreis zugänglich. Als Auslöser dient die Maus 18, über die ein adresscodiertes Steuersignal für die rück- und vorlaufenden Marker 11, 12 erzeugt und über Internet 7 dem Server 6 zur Erstellung der Clips 15, 15', 15"... zuführbar ist. Es kann somit ein Trainer die spielerbezogenen Situationen individuell als Dokumentation zusammenfassen und etwa nur den Spielern seiner Mannschaft zugänglich machen, während auf die vom Platzwart über den Auslöser 10 erstellte Zusammenfassung generell von allen Internetbenutzern zugegriffen werden kann.

## Patentansprüche

1. Anordnung zur Videoaufnahme von Veranstaltungen mit einer oder mehreren Kameras (2, 3), die die Aufnahmen an ein digitales Aufzeichnungsgerät (4) mit Video-Datenspeicherung weiterleiten, wobei ein Auslöser (10) vorgesehen ist; wobei entweder der Auslöser (10) die Zeitpunkte, zu denen er betätigt wird, speichert oder der Auslöser mit dem Aufzeichnungsgerät (4) verbunden ist und Steuersignale zu den Zeitpunkten, zu denen er betätigt wird, an das Aufzeichnungsgerät (4) sendet; **dadurch gekennzeichnet, dass** das Aufzeichnungsgerät (4) mit einer Programmlogik versehen ist, die den Datenstrom - von jedem Zeitpunkt, zu dem der Auslöser betätigt wird, eine vorwählbare Zeitspanne bis zu einem Startmarker (11) zurückgreifend und ab dem Startmarker (11) bis zum Ende einer von einem Stoppmarker (12) begrenzten Zeitspanne vorauseilend - separat und unabhängig von der Aufnahme auf einen Speicher legt, sodass jeweils ein Clip (15, 15', 15") entsteht, wobei mehrere Clips aneinandergereiht abspeicherbar und abrufbar sind.

2. Anordnung nach Anspruch 1, **dadurch gekennzeichnet, dass** die Kameras (2, 3) fix installiert sind.

3. Anordnung nach Anspruch 1 oder 2, **dadurch gekennzeichnet, dass** der Auslöser (10) selbst die Zeitpunkte, zu denen er betätigt wird, speichert, dass er über eine Schnittstelle mit dem Aufzeichnungsgerät (4) verbindbar ist und dass das Aufzeichnungsgerät (4) auf Grund der auf dem Auslöser (10) gespeicherten Zeitpunkte nach dessen Verbindung mit dem Aufzeichnungsgerät (4) die Clips (15, 15', 15") erstellt und auf dem Auslöser (10) speichert.

4. Anordnung nach Anspruch 1 oder 2, **dadurch gekennzeichnet, dass** zur Betätigung unmittelbar am Ort der Veranstaltung und zur Übermittlung des Steuersignals der Auslöser (10) als Handsender ausgebildet ist.

5. Anordnung nach einem der Ansprüche 1 bis 4, **dadurch gekennzeichnet, dass** die Anordnung gleichzeitig zur Übertragung und Wiedergabe der Veranstaltungen dient, indem das digitale Aufzeichnungsgerät (4) ein Server (6) ist oder mit einem Server (6) verbunden ist und die Aufnahmen als Daten an den Server (6) weiterleitet, von welchem die Daten über Internet (7) für die Wiedergabe auf einem Bildschirm (9) bzw. auf einem Handy abrufbar sind, wobei auch die Clips (15, 15', 15") an den Server (6) - separat und unabhängig von der laufenden Aufnahme und Wiedergabe - zum Abruf von diesem über Internet (7) weitergeleitet werden.

6. Anordnung nach Anspruch 5, **dadurch gekennzeichnet, dass** eine Maustaste (18) oder dergleichen mittelbar bei einem Betrachter der Übertragung als Auslöser dient.

7. Anordnung nach Anspruch 6, **dadurch gekennzeichnet, dass** das Steuersignal der Maustaste (18) dem Datenstrom im Internet (7) überlagert ist.

8. Anordnung nach einem der Ansprüche 5 bis 7, **dadurch gekennzeichnet, dass** die auf Grund von Steuersignalen zwischen den zurückgreifend gesetzten und den vorauseilenden Markern (11, 12) gespeicherten und an den Server (6) weitergeleiteten Daten aneinandergereiht als halbautomatisch erstellte Zusammenfassung einer Veranstaltung vom Server (6) über Internet (7) abrufbar sind.

9. Anordnung nach einem der Ansprüche 5 bis 8, **dadurch gekennzeichnet, dass** der oder die Auslöser (10) jeweils mit Adressencodierung versehen sind und die über den oder die Auslöser (10) generierten Speicherinhalte jeweils einem adressspezifischen, individuellen Datenspeicher (19) im Internet (7) zugeordnet und von diesen Datenspeichern (19) selektiv, gegebenenfalls mit Passwort, abrufbar sind.

## Claims

1. System for the video recording of events with one or more cameras (2, 3) which transmit the recordings to a digital recording device (4) with a video storage functionality, a trigger (10) being provided; wherein either the trigger (10) stores the instants of time when it is actuated, or the trigger is connected to the recording device (4) and transmits control signals to the recording device (4) at the instants of time when it is actuated ; **characterized in that** the recording device (4) is provided with a program logic which stores the data stream - from each instant of time at which the trigger is actuated a selectable period of time into the past until a starting marker (11) and from the starting marker (11) until the end of a period of time limited by a stop marker (12) in the future - independently and separately from the recording to a memory resulting in a clip (15, 15', 15") being formed, several clips following each other being stored and available.

2. Arrangement according to claim 1, **characterized in that** the cameras (2, 3) are fixedly installed.

3. Arrangement according to claim 1 or 2, **characterized in that** the trigger (10) itself stores the instants of time at which it is actuated, that it can be connected to the recording device (4) via an interface, and that the recording device (4) creates, based on the instants of time stored on the trigger (10), after its connection to the recording device (4), the clips (15, 15', 15") and stores them on the trigger (10).

4. Arrangement according to claim 1 or 2, **characterized in that** the trigger (10) is designed as a hand transmitter for actuation directly at the location of the event and for transmitting the control signal.

5. Arrangement according to one of claims 1 to 4, **characterized in that** the arrangement serves simultaneously for the transmission and playback of the events, **in that** the digital recording device (4) is a server (6) or is connected to a server (6) and transmits the recordings in form of data to the server (6), the data being retrievable therefrom via Internet (7) vfor playback on a screen (9) or on a mobile phone, wherein the clips (15, 15', 15") are also transmitted to the server (6) - separately and independently from the current recording and playback - to be retrieved from the latter via Internet (7).

6. Arrangement according to claim 5, **characterized in that** a mouse button (18) or the like indirectly serves as a trigger for an observer of the transmission.

7. Arrangement according to Claim 6, **characterized in that** the control signal of the mouse button (18) is superimposed on the data stream in the Internet (7).

8. Arrangement according to one of Claims 5 to 7, **characterized in that** the data which are stored and transmitted to the server (6) based upon control signals between markers (11, 12) in the past and in the future are arranged as a semiautomatic summary of an event and are accessible from the server (6) via the Internet (7).

9. Arrangement according to one of claims 5 to 8, wherein the trigger(s) (10) are each provided with address coding, and the memory contents generated via each trigger (10) are assigned to an address-specific, individual data memory (19) in the Internet (7) and can be accessed from these data memories (19) selectively, optionally with a password.

## Revendications

1. Dispositif pour l'enregistrement vidéo des événements avec une ou plusieurs caméras (2, 3), qui transmettent l'enregistrement à un appareil d'enregistrement numérique (4) avec une mémoire de données vidéo, un déclencheur (10) étant prévu; soit le déclencheur (10) enregistre le moment auquel il est actionné, soit le déclencheur est connecté avec l'appareil d'enregistrement (4) et envoie des signaux de commande aux instants où il est actionné à l'appareil d'enregistrement (4); **caractérisée en ce que** l'appareil d'enregistrement (4) est muni d'une logique de programme qui met en mémoire un flux de données - de chaque instant auquel le déclencheur est activé, une période présélectionnée de temps en arrière jusqu'à un marqueur de début (11) et à partir du marqueur de début (11) à l'avance jusqu'à la fin d'une période de temps limitée par un marqueur d'arrêt (12) - séparément et indépendamment de l'enregistrement, de telle sorte que dans chaque cas un clip (15, 15', 15") est constitué, plusieurs clips peuvent être enregistrés juxtaposés et peuvent être appelés.

2. Dispositif selon la revendication 1, **caractérisée en ce que** les caméras (2, 3) sont installées en permanence.

3. Dispositif selon les revendications 1 ou 2, **caractérisées en ce que** le déclencheur (10) lui-même enregistre les moments auxquels il est actionné, qu'il est connectable via une interface avec l'appareil d'enregistrement (4) et que l'appareil d'enregistrement (4), sur base des moments enregistrés sur le déclencheur (10), une fois connecté avec l'appareil d'enregistrement (4), crée les clips (15, 15', 15") et mémorise lesquels sur le déclencheur (10).

4. Dispositif selon les revendications 1 ou 2, **caractérisées en ce que** pour actionner directement à l'emplacement de l'événement et pour transmettre le signal de commande, le déclencheur (10) est réalisé sous la forme d'un émetteur portatif.

5. Dispositif selon une des revendications de 1 à 4, **caractérisée en ce que** le dispositif sert en même temps pour la transmission et à la reproduction des événements, ce en quoi l'appareil d'enregistrement numérique (4) est un serveur (6) ou est connecté à un serveur (6) et transmet les enregistrements sous la forme de données au serveur (6), à partir duquel les données sont disponibles sur Internet (7) pour une reproduction sur un écran (9) ou sur un téléphone cellulaire, les clips (15, 15', 15") étant également transmis au serveur (6) - séparément et indépendamment de l'enregistrement et de la reproduction en cours - pour être appelés à partir de celui-ci via Internet (7).

6. Dispositif selon la revendication 5, **caractérisée en ce qu'** un bouton de la souris (18) ou quelque chose de similaire sert indirectement comme déclencheur pour un spectateur de la transmission.

7. Dispositif selon la revendication 6, **caractérisée en ce que** le signal de commande du bouton de la souris (18) est superposé au flux de données sur Internet (7).

8. Dispositif selon une des revendications 5 à 7, **caractérisée en ce que** les données enregistrées et transmises au serveur (6) sur base des signaux de commande entre les marqueurs (11, 12) en arrière et à l'avance, juxtaposées sous la forme d'un résumé généré semi-automatiquement d'un événement sont appelable à partir du serveur (6) via Internet (7).

9. Dispositif selon une des revendications 5 à 8, **caractérisée en ce que** le ou les déclencheur(s) (10) sont pourvu(s) chacun d'un codage d'adresse et que les contenus de la mémoire générés via le ou les déclencheur(s) (10) chacuns sont associés avec une mémoire de données (19) individuelle, spécifique à l'adresse, sur Internet (7), et que ceux-ci sont appelable à partir de ces mémoires de données (19) de manière sélective, éventuellement avec mot de passe.
